# EUROPEAN PATENT APPLICATION

(11) **EP 2 538 260 A1**
(43) Date of publication of application: **26.12.2012**
(21) Application number: 11178501.0
(22) Date of filing: 23.08.2011
(51) Int. Cl.: G02B 17/08, G02B 27/09, F21V 7/00, H01L 33/60, F21V 5/04

(54) **Condenser lens made of glass, lamp and camera**

(30) Priority: 24.06.2011 CN 201110173497
(71) Applicant: Civilight Shenzhen Semiconductor Lighting Co., Ltd, Shenzhen (CN)
(72) Inventor: Liang, Youqing, Shenzhen (CN); Xue, Xinshen, Shenzhen (CN)
(74) Representative: Heine, Christian Klaus

(57) **Abstract**

A condenser lens, lamp and camera applicable to an optical area are provided. The condenser lens is a physical glass lens and has an incident surface (1), an exit surface (2) and a side surface (3) arranged around a central axis of the condenser lens. The side surface is lattice-shaped. The condenser lens of the present invention adopts a glass material, which improves a light extraction efficiency of the lens and reduces a light energy loss. The lattice-shaped side surface of the lens reflects lights in different directions by multiple small-area lattice units instead of reflecting lights by a single curved surface. The reasonably-designed lattice structure enables each lattice unit reflecting lights in a predetermined direction, which may realize a uniform illumination at a small angle and is beneficial to spot-lighting. This condenser lens may be widely applied in all sorts of illuminating lamps or an illumination system of a camera.

## Description

### FIELD OF INVENTION

The present invention relates to the field of optics, and more particularly to a condenser lens, a lamp and a camera.

### BACKGROUND OF INVENTION

Currently, optical lenses may be classified into glass lenses and PMMA material lenses, which are widely applied in semiconductor illuminating lamps and lens set of a camera. The lamp available on the market mainly adopts a PMMA lens and a reflector serving as a light distribution tool. The light uniformity when the reflector is adopted for distributing light is unsatisfactory and the light transmitting performance of the PMMA lens is limited due to the material. As compared with the PMMA material, the glass has a better light transmittance and is a preferable material for lens. However, the glass material is difficult to process and the lens structure is hard to be improved, so only a few of lamps or cameras adopt the glass lens. This glass lens reflects light by a single curved surface, so the advantages of the glass lens are not fully implemented. This glass lens cannot obtain a small angle while improving the transmittance, the brightness of the exit light is not uniform, and the spot-lighting effect is unsatisfactory.

### SUMMARY OF THE INVENTION

An objective of the present invention is a condenser lens having a high light transmittance, small light exit angle and uniform brightness, and thus providing a satisfactory spot-lighting effect.

Accordingly, the present invention provides a condenser lens, the condenser lens is physical glass lens; the condenser lens has an incident surface, an exit surface and a side surface arranged around a central axis of the condenser lens; and the side surface is lattice-shaped.

Another objective of the present invention is a lamp, which includes a light source and a condenser lens disposed on an exit light path of the light source. The condenser lens adopts the above-mentioned condenser lens.

Still another objective of the present invention is a camera, which includes an illumination system. The illumination system includes a light source and a condenser lens disposed on an exit light path of the light source. The condenser lens adopts the above-mentioned condenser lens.

The condenser lens of the present invention is made of a glass material and may improve a light extraction efficiency of the lens and reduces a light energy loss. In the present invention, the side surface of the lens is designed to be lattice-shaped, which reflects lights in different directions by multiple small-area lattice units instead of reflecting lights by a single curved surface. The reasonably-designed lattice structure enables each lattice unit reflecting lights in a predetermined direction, which may realize a uniform illumination at a small angle and is beneficial to spot-lighting. This condenser lens may be widely applied in all sorts of illuminating lamps or an illumination system of a camera. The lamp and the camera adopting the condenser lens may have a high light extraction efficiency and uniform illumination effect at a small angle.

### BRIEF DESCRIPTION OF THE DRAWINGS

FIG. 1 is a schematic three-dimensional view of a condenser lens according to a first embodiment of the present invention;
FIG. 2 is a schematic cross-sectional view (1) of the condenser lens according to the first embodiment of the present invention;
FIG. 3 is a light path diagram of the condenser lens according to the first embodiment of the present invention;
FIG. 4 is a schematic cross-sectional view (2) of the condenser lens according to the first embodiment of the present invention condenser lens;
FIG. 5 is a schematic cross-sectional view (3) of the condenser lens according to the first embodiment of the present invention condenser lens;
FIG. 6 is a schematic cross-sectional view (4) of the condenser lens according to the first embodiment of the present invention condenser lens;
FIG. 7 is a schematic cross-sectional view (5) of the condenser lens according to the first embodiment of the present invention condenser lens;
FIG. 8 is a schematic bottom view of the condenser lens according to the first embodiment of the present invention;
FIG. 9 is a schematic front view of the condenser lens according to the first embodiment of the present invention;
FIG. 10 is a schematic cross-sectional view (6) of the condenser lens according to the first embodiment of the present invention condenser lens;
FIG. 11 is a schematic cross-sectional view (7) of the condenser lens according to the first embodiment of the present invention condenser lens;
FIG. 12 is a schematic front view (1) of a condenser lens according to a second embodiment of the present invention;
FIG. 13 is a schematic front view (2) of the condenser lens according to the second embodiment of the present invention;
FIG. 14 is a light path diagram of the condenser lens according to the second embodiment of the present invention;
FIG. 15 is a schematic front view (1) of a condenser lens according to a third embodiment of the present invention; and
FIG. 16 is a schematic front view (2) of the condenser lens according to the third embodiment of the present invention.

### DETAILED DESCRIPTION OF THE INVENTION

To make the objectives, technical solutions, and advantages of the present invention become more apparent, the present invention is further described below in detail with reference to the accompanying drawings and embodiments. It should be understood that, the specific embodiments described herein are mainly intended to demonstrate the present invention, instead of restricting the present invention.

The present invention provides a condenser lens. The lens is a physical glass lens and has an incident surface, an exit surface and a side surface disposed around a central axis of the condenser lens. The side surface is lattice-shaped.

The condenser lens of the present invention adopts a glass material, which improves a light extraction efficiency of the lens and reduces a light energy loss. The side surface of the lens of present invention is designed to be lattice-shaped, which reflects lights in different directions by multiple small-area lattice units instead of reflecting lights by a single curved surface. The reasonably-designed lattice structure enables each lattice unit reflecting lights in a predetermined direction reflects light, which may realize a uniform illumination at a small angle and is beneficial to spot-lighting.

Additionally, the present invention provides a lamp, which includes a light source and a condenser lens disposed on an exit light path of the light source. The condenser lens adopts the above-mentioned condenser lens.

Additionally, the present invention provides a camera, which includes an illumination system. The illumination system includes a light source and a condenser lens disposed on an exit light path of the light source. The condenser lens adopts the above-mentioned condenser lens.

The lamp and camera adopting the condenser lens may have a uniform illumination effect at a small angle and high light extraction efficiency.

Hereinafter, the condenser lens of the present invention is described with reference to the embodiments.

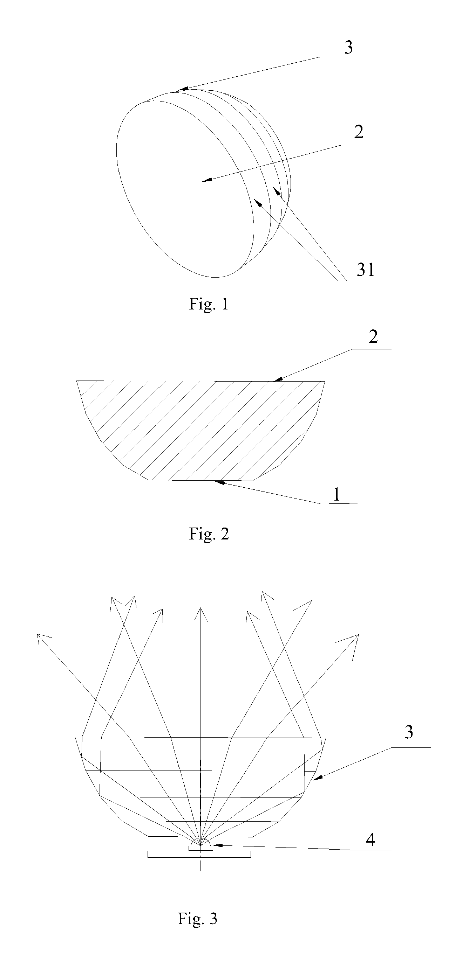

FIG. 1 is a schematic three-dimensional view of a condenser lens according to a first embodiment of the present invention, FIG. 2 is a schematic cross-sectional view (1) of the condenser lens according to the first embodiment of the present invention, and FIG. 3 is a light path diagram of the condenser lens according to the first embodiment of the present invention. For the convenience of illustration, only the parts related to the embodiment are shown.

In this embodiment, the condenser lens is a physical glass lens, and the glass lens is mainly placed on a light exit side of a light source and is configured to adjust the light propagation direction to obtain an illumination light at a desired light emitting angle and having a desired uniformity and brightness. Referring to FIGs. 1, 2 and 3, the glass lens mainly includes an incident surface 1, an exit surface 2 and a side surface 3. An area of the incident surface 1 is normally smaller than an area of the exit surface 2. The side surface 3, the incident surface 1 and the exit surface 2 collaboratively form the surface of the condenser lens. It should be understood that the side surface 3 is disposed between the incident surface 1 and the exit surface 2, and the side surface 3 is disposed around a central axis of the glass lens. The light source 4 is located at a light incident side of the incident surface 1. The emitted light after passing the incident surface 1 enters the lens, and a part of the light is directly emitted through the exit surface 2 for illumination. A major part of the light is projected to the side surface 3 of the lens, and is reflected by the side surface 3 and then emitted through the exit surface 2 for illumination. Definitely, a small part of the light is refracted by the side surface 3 and then emitted outside. To improve the light exit angle and uniformity of the lens, the side surface 3 in this embodiment is designed to be lattice-shaped and is formed by multiple small-area planar or curved lattice units arranged closely. Definitely, the lattice-shaped side surface is different from the conventional conical side surface or curved side surface that is divided into multiple units and has a complete surface without changes, and the conventional structure apparently does not have improvements. It should be understood that the lattice units in this embodiment do not form a common smooth surface no matter the lattice units are planar or curved surface. The lattice units reflect lights in different directions and the lattice structure when properly designed such as the size and shape may reflects the light in a predetermined direction, thereby obtaining the exit light at the desired angle and having the desired uniformity.

In this embodiment, the side surface 3 may have several structures. In the implementation of this embodiment shown in FIGs. 1 and 2, the side surface 3 may be formed by a series of light convergent loops 31 consecutively distributed along a central axis of the lens. A predetermined included angle is formed between every two adjacent light convergent loops 31, and the side surface 3 may be regarded as being formed by a line segment around the central axis of the lens for a whole turn. The included angle formed between each line segment and the central axis is gradually reduced starting from the incident surface. That is to say, starting from the incident surface 1, the angle of the light convergent loop inclined from the lens central axis is gradually reduced. For example, starting from the incident surface, the included angle formed between the first loop and the central axis is about 40°, the included angle formed between the second loop and the central axis is about 35°, and the included angle formed between the last loop and the central axis is about 10°. The width of each loop and the inclined angle relative to the central axis may be set according to the requirements of the application.

In this embodiment, the condenser lens is made of a high transmittance glass material, and the glass material has a transmittance higher than the conventional PMMA material, thus effectively increasing an exit light flux of the lens and reducing the light energy loss and further improving the brightness of the illumination light. As compared with the conventional single reflecting surface, the reflecting angle of the lattice-shaped side surface is easier to control and the specific structure and shape of the lattice may be designed according to the requirements of the application, so that the lens provides an exit light having a smaller angle and uniform intensity while improving the exit light flux and is beneficial to spot-lighting.

In this embodiment, the incident surface 1 may be parallel to the exit surface 2. Concave and convex micro-structure units may be closely disposed on the exit surface 2 to obtain a more uniform exit light.

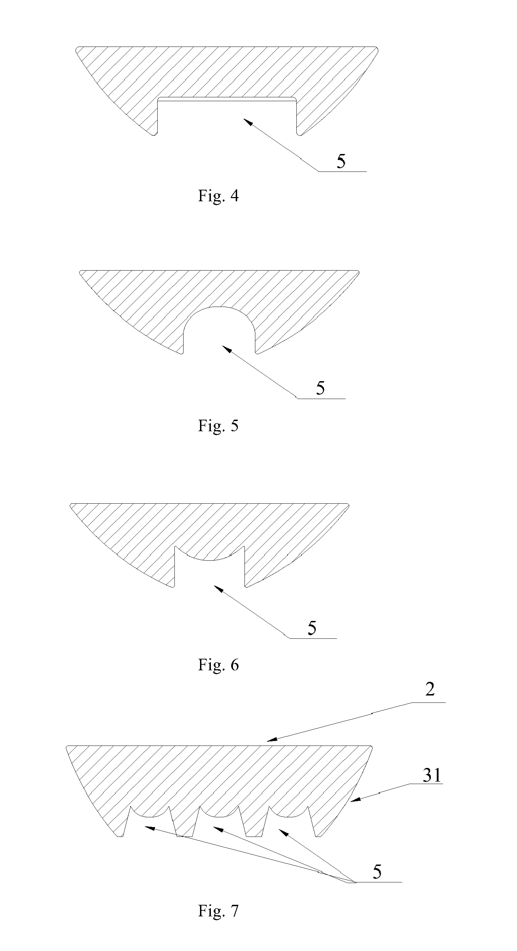

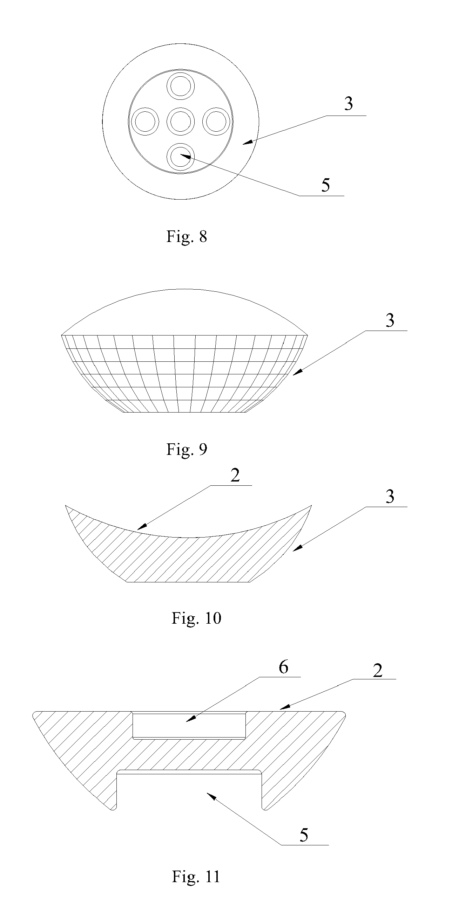

Referring to FIGs. 4 to 8, in this embodiment, at least one first groove 5 may be disposed on a bottom of the lens, and the light source 4 may be placed in the groove 5. The light source 4 and the groove 5 may be disposed one to one and may be disposed many to one as shown in FIGs. 7 and 8. Now, the incident surface 1 is a boundary surface of the first groove 5 and the lens. In this manner, almost all the lights emitted by the light source 4 pass through the boundary surface and are incident to the lens. As compared with the planar incident surface, the groove may reduce the loss of the light to a certain extent.

Referring to FIGs. 9 and 10, in this embodiment, the exit surface 2 may adopt many kinds of structures, and in specific may be a convex surface and may also be a concave surface. In this embodiment, the exit surface 2 is preferably the concave surface, and thus reducing the average thickness of the lens, further reducing the light absorption of the lens and improving the light extraction efficiency of the lens.

Likewise, a second groove 6 may also be disposed on the exit surface 2 as shown in FIG. 11. As the second groove 6 exists, the average thickness of the lens is reduced, thus improving the light extraction efficiency of the lens.

### Embodiment 2:

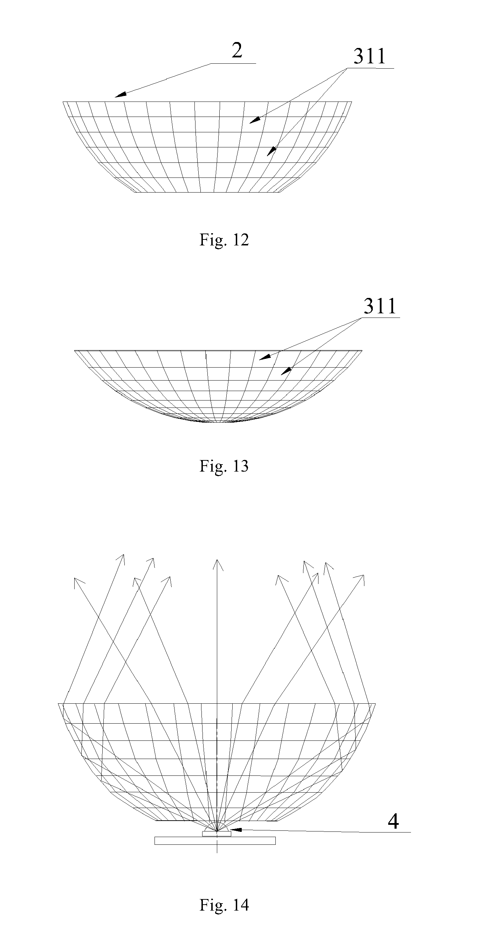

FIG. 12 is a schematic front view (1) of a condenser lens according to a second embodiment of the present invention, FIG. 13 is a schematic front view (2) of the condenser lens according to the second embodiment of the present invention, and FIG. 14 is a light path diagram of the condenser lens according to the second embodiment of the present invention. For the convenience of illustration, only the parts related to the embodiment are shown.

In this embodiment, the side surface 3 in the above embodiment may be further improved to obtain a better light convergence effect. Referring to FIGs. 12 and 14, in specific, the side surface 3 is still formed by multiple light convergent loops 31, and each light convergent loop 31 may be formed by many closely arranged rectangular light-convergent units 311. Several light-convergent units 311 are consecutively arranged around the central axis of the lens for a turn to form one light convergent loop 31. In this manner, the entire side surface 3 presents the lattice structure shown in FIG. 12. In this embodiment, the side surface 3 may be divided precisely by the multiple micro rectangular light-convergent units 311, which is beneficial to adjust the angle and uniformity of the exit light. In this embodiment, the size of the light-convergent units may be reasonably designed according to the requirements of the application.

In this embodiment, the incident surface 1 and the side surface 3 may be an integrated curved surface without distinct boundary as shown in FIG. 13. The lattice structure of the side surface 3 is distributed on the entire curved surface. A certain area on the bottom of the curved surface is almost planar, and the almost planar area is the incident surface 1. The light source is placed below the incident surface 1 and the exit light of the light source is incident to the lens through the incident surface 1.

### Embodiment 3:

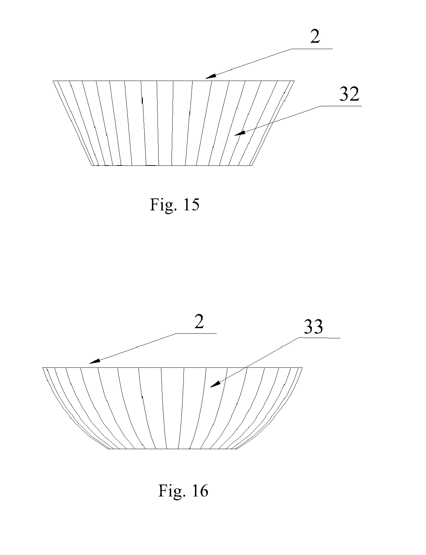

FIG. 15 is a schematic front view (1) of a condenser lens according to a third embodiment of the present invention and FIG. 16 is a schematic front view (2) of the condenser lens according to the third embodiment of the present invention. For the convenience of illustration, only the parts related to the embodiment are shown.

The side surface 3 in the first embodiment may be designed to be other structures. In this embodiment, the side surface 3 may be formed by multiple bar-shaped planar units 32 consecutively arranged around the central axis of the lens for a turn as shown in FIG. 15, and the overall side surface 3 is in a conical shape. The side surface 3 may be formed by multiple bar-shaped curved surface units 33 consecutively arranged around the central axis of the lens for a turn as shown in FIG. 16.

The above descriptions are merely taken as the preferred embodiment of the present invention, but not intended to restrict the present invention. Any modification, equivalent replacement, and improvement that fall within the spirit and principle of the present invention are included in the protection scope of the claims of the present invention.

## Claims

1. A condenser lens, comprising an incident surface, an exit surface and a side surface arranged around a central axis of the condenser lens, wherein the condenser lens is a physical glass lens and the side surface is lattice-shaped.

2. The condenser lens according to Claim 1, wherein the incident surface and exit surface are planar.

3. The condenser lens according to Claim 1, wherein a bottom of the condenser lens is provided with a groove for accommodating a light source.

4. The condenser lens according to Claim 1, wherein the exit surface is a concave or convex surface.

5. The condenser lens according to Claim 1, wherein the lattice-shaped side surface is formed by multiple light convergent loops consecutively arranged along the central axis and an included angle formed between a surface of the light convergent loop and the central axis is gradually reduced further away from the incident surface.

6. The condenser lens according to Claim 5, wherein the respective light convergent loop is formed by multiple light-convergent units consecutively arranged around the central axis for a turn.

7. The condenser lens according to Claim 6, wherein the light-convergent units are rectangular planar units.

8. The condenser lens according to Claim 1, wherein the lattice-shaped side surface is formed by multiple bar-shaped planar units or bar-shaped curved surface units consecutively arranged around the central axis for a turn.

9. A lamp, comprising a light source and a condenser lens disposed on an exit light path of the light source, wherein the condenser lens is the condenser lens according to Claims 1 to 8.

10. A camera, comprising an illumination system, which comprises a light source and a condenser lens disposed on an exit light path of the light source, wherein the condenser lens is the condenser lens according to Claims 1 to 8.
